# EUROPÄISCHE PATENTSCHRIFT

(11) **EP 3 523 852 B1**
(45) Veröffentlichungstag und Bekanntmachung des Hinweises auf die Patenterteilung: **02.12.2026**
(21) Anmeldenummer: 17781462.1
(22) Anmeldetag: 05.10.2017
(51) Int. Cl.: H01M 10/625, H01M 10/653, H01M 10/6551, H01M 10/6556, H01M 10/6554, F28F 21/04, F28F 21/06, F28F 21/08, H01M 10/052, H01M 10/04, H01M 10/656, H01M 10/647, B60L 58/24

(54) **ENERGIESPEICHERMODUL MIT EINEM TEMPERATURMANAGEMENT-SYSTEM UND EIN ENERGIESPEICHERSYSTEM**
ENERGY STORAGE MODULE COMPRISING A TEMPERATURE MANAGEMENT SYSTEM, AND ENERGY STORAGE SYSTEM
MODULE D'ACCUMULATION D'ÉNERGIE MUNI D'UN SYSTÈME DE GESTION DE LA TEMPÉRATURE ET SYSTÈME D'ACCUMULATION D'ÉNERGIE

(30) Priorität: 05.10.2016 DE 102016118864
(43) Veröffentlichungstag der Anmeldung: 14.08.2019
(73) Patentinhaber: Clarios Advanced Solutions GmbH, 30419 Hannover (DE)
(72) Erfinder: EHRLICH, Bernhard, 31535 Neustadt am Rübenberge (DE); JOSWIG, Ralf, 29690 Buchholz (DE); BRENNER, Helge, 30453 Hannover (DE); KUPER, Christian, 30890 Barsinghausen (DE)
(74) Vertreter: Meissner Bolte Partnerschaft mbB
(86) Internationale Anmeldenummer: PCT/EP2017/075341
(87) Internationale Veröffentlichungsnummer: WO 2018/065516

(56) Entgegenhaltungen:
- EP-A1- 2 475 025
- DE-A1- 102010 038 681
- DE-A1- 102013 206 581
- DE-A1- 102014 203 846
- US-A1- 2012 263 988

## Beschreibung

Die vorliegende Anmeldung betrifft ein Energiespeichermodul mit einem Temperaturmanagement-System und ein Energiespeichersystem mit einem solchen Energiespeichermodul.

Energiespeichermodule und/oder Energiespeichersysteme sind üblicherweise mit einem Temperaturmanagement-System des Energiespeichermoduls bzw. des Energiespeichersystems ausgestattet. Das Temperaturmanagement-System weist herkömmlicherweise ein Wärmeleitelement und einen Wärmeübertrager auf, wobei das Wärmeleitelement direkt auf dem Wärmeübertrager angeordnet ist, und zwar in Richtung eines Innenraums des Energiespeichermoduls bzw. des Energiespeichersystems.

Das Temperaturmanagement-System des Energiespeichermoduls bzw. des Energiespeichersystems ist dazu vorgesehen, die Temperatur von einer Vielzahl von Energiespeicherzellen in einem vorab festgelegten oder festlegbaren Temperaturbereich zu halten. Dazu kann beispielsweise eine während des Betriebs der Vielzahl von Energiespeicherzellen entstehende Wärme aus dem Energiespeichermodul bzw. dem Energiespeichersystem abgeführt werden. Genauso gut kann auch Wärme zu den Energiespeicherzellen zugeführt werden.

Dazu steht das Wärmeleitelement auf einer Seite mit zumindest einigen Energiespeicherzellen in Kontakt und auf der anderen Seite mit dem Wärmeübertrager. Wenn sich nun der Wärmeübertrager beispielsweise durch Temperaturdifferenzen bzw. Temperaturänderungen in verschiedenen Bereichen unterschiedlich ausdehnt bzw. zusammenzieht, oder gar verbiegt, kann es dazu kommen, dass ein Kontakt zwischen dem Wärmeleitelement und den Energiespeicherzellen und/oder ein Kontakt zwischen dem Wärmeleitelement und dem Wärmeübertrager beeinträchtigt wird oder sich das Wärmeleitelement sogar von den Energiespeicherzellen und/oder dem Wärmeübertrager löst. Dies kann ebenso durch äußere mechanische Einwirkungen, wie beispielsweise mechanischer Schock, Vibrationen und dergleichen, verursacht werden.

Dadurch wird zum einen die Fähigkeit des Temperaturmanagement-Systems herabgesetzt, da aufgrund von unzureichender Kontaktierung des Wärmeleitelements die Wärme nicht mehr, oder nur noch teilweise aus dem bzw. in das Energiespeichermodul bzw. aus dem bzw. in das Energiespeichersystem geleitet werden kann, wodurch im ersten Fall eine Temperaturerhöhung der Energiespeicherzellen und im zweiten Fall eine Erhöhung der Zeitdauer für eine Erwärmung der Energiespeicherzellen - und damit eine Reduzierung des Funktionsspektrums des Energiespeichersystems - bewirkt wird.

Gewöhnlich werden herkömmliche Wärmeleitelemente aus elastoplastischen Materialien als Trägersubstanz des Wärmeleitelements hergestellt, wobei die Trägersubstanz alleine eine geringe Wärmeleitfähigkeit aufweist. Aus diesem Grund wird der Trägersubstanz meist ein Zusatzstoff beigemischt. Der Zusatzstoff weist in vielen Fällen keramische Partikel auf. Derartige Partikel können sich beispielsweise durch Fahrzeugbewegungen verursachte Vibrationen und/oder Stöße relativ zueinander und/oder relativ zu der Trägersubstanz bewegen, was zu einer Schwächung der Trägersubstanz durch abrasiven Verschleiß führen kann. Dies wiederum reduziert die mechanischen Spannungsfestigkeiten des Wärmeleitelements. Dadurch wird eine Schädigung des Materials ermöglicht, insbesondere können sich Risse in dem Wärmeleitelement bilden. Durch diesen Effekt können beispielsweise auch eine oder mehrere Energiespeicherzellen das Wärmeleitelement durchdringen und so den Wärmeübertrager kontaktieren, was zu einem Kurzschluss oder zumindest einer Selbstentladung der Energiespeicherzellen führen kann. Die Dokumente EP 2 475 025, DE 10 2014 203846 und DE 10 2013 206581 offenbaren Batteriemodule mit wärmeableitenden Strukturen.

Auch kann ein Verspröden des Wärmeleitelements durch eine Diffusion von Weichmachern aus der Trägersubstanz des Wärmeleitelements verursacht werden, was zu einer zunehmenden Rissbildung des Wärmeleitelements führen kann.

Dadurch werden die elastischen Eigenschaften des Wärmeleitelements herabgesetzt, was zu einer zunehmenden Verschlechterung der mechanischen und funktionellen Eigenschaften des Wärmeleitelements führen kann.

Beispielsweise in einem Fall, dass die Menge an Material des Wärmeleitelements zwischen Oberflächen des Wärmeübertragers und der Energiespeicherzelle(n) geringer wird, bleiben der elektrische Widerstand und der thermische Widerstand zwischen diesen Oberflächen gering, solange die Oberflächen des Wärmeübertragers und/oder der Energiespeicherzelle(n) das Wärmeleitelement weiterhin kontaktieren. Wenn aber Luft die geringer werdende Menge an Material des Wärmeleitelements ersetzt, z. B. bei einer zumindest bereichsweisen Ablösung des Wärmeleitelements von der Oberfläche des Wärmeübertragers und/oder der Energiespeicherzelle(n), und somit eine unzureichende Kontaktierung zwischen dem Wärmeleitelement und der Oberfläche des Wärmeübertragers und/oder der Energiespeicherzelle(n) entsteht, steigt sowohl der elektrische Widerstand als auch der thermische Widerstand an.

Zum anderen kann ein Kurzschluss verursacht werden, und zwar wenn mehr als ein potentialführendes Zellengehäuse mit dem Wärmeübertrager in Kontakt kommt, bzw. wenn der Wärmeübertrager ein anderes elektrisches Potential hat als die kontaktierende(n) Energiespeicherzelle(n). In einem weniger extremen Fall können die Energiespeicherzellen selbstentladen werden, wenn der Kontakt zu dem Wärmeleitelement einen geringen elektrischen Widerstand hat.

Obwohl nicht im Einzelnen geklärt, ist anzunehmen, dass einige der oben aufgeführten Probleme ursächlich für die Überhitzung der Lithium-Ionen-Batterien waren, welche in dem Flugzeugtyp Boeing 787 2012/2013 eingesetzt wurden.

Der Erfindung liegt daher die Aufgabe zugrunde, ein verbessertes und robustes Energiespeichermodul und/oder Energiespeichersystem bereitzustellen, welches die Nachteile des Standes der Technik nicht aufweist und zudem einfach und kostengünstig herzustellen ist.

Im Hinblick auf das Energiespeichermodul wird die der Erfindung zugrundeliegende Aufgabe erfindungsgemäß durch den Gegenstand des unabhängigen Patentanspruchs 1 gelöst. Vorteilhafte Weiterbildungen sind in den abhängigen Ansprüchen angegeben.

Demnach wird erfindungsgemäß ein Energiespeichermodul zum Einsatz in einem Fahrzeug, insbesondere zum Einsatz in einem Hybrid-Fahrzeug angegeben. Das Energiespeichermodul weist hierbei eine Vielzahl von Energiespeicherzellen und ein zumindest einigen, bevorzugt allen, Energiespeicherzellen zugeordnetes Temperaturmanagement-System auf. Das Temperaturmanagement-System weist wiederum einen Wärmeübertrager und ein Wärmeleitelement auf, wobei zwischen dem Wärmeübertrager und dem Wärmeleitelement eine Verstärkungsschicht vorgesehen ist, bzw. angeordnet ist, wobei die Verstärkungsschicht einen höheren Elastizitätsmodul aufweist als der Wärmeübertrager.

Die Vorteile der Erfindung liegen auf der Hand. Durch das Vorsehen eines erfindungsgemäßen Temperaturmanagement-Systems können die bekannten Probleme gelöst werden. So führt eine Verstärkungsschicht zwischen dem Wärmeleitelement und dem Wärmeübertrager zu einer höheren mechanischen- und thermischen Stabilität der Oberfläche des Wärmeübertragers bei nahezu gleichbleibenden elastischen Eigenschaften des Temperaturmanagement-Systems, insbesondere des Wärmeübertragers mit der Verstärkungsschicht.

Des Weiteren wird auch die Wärmeleitfähigkeit des Temperaturmanagement-Systems, insbesondere durch eine geeignete Wahl der Verstärkungsschicht, nicht beeinträchtigt, wodurch weiterhin Wärme aus dem Energiespeichermodul abgeführt bzw. Wärme in das Energiespeichermodul zugeführt werden kann.

Darüber hinaus besteht die Möglichkeit, bei unveränderten funktionellen Systemanforderungen, die Dicke des Wärmeleitelements um den Funktionsanteil zur elektrischen Isolation zu reduzieren, welcher durch das Vorsehen der Verstärkungsschicht bereits erfüllt wird. Dies bietet die Möglichkeit, die Dicke des Wärmeleitelements auf die erforderliche Funktion der Wärmeleitung und der Kompensierung von äußeren mechanischen Einwirkungen, wie beispielsweise mechanischem Schock, Vibrationen und dergleichen zu beschränken. Damit kann (unter Umständen) ein geringerer Wärmewiderstand des Wärmeleitelements bewirkt werden. Dadurch wird ein größerer Wärmestrom zwischen den Energiespeicherzellen und dem Wärmeübertrager ermöglicht, und zwar ohne den vorab festgelegten bzw. vorab festlegbaren Temperaturbereich zu verlassen, was wiederum zum einen höheren elektrischen Strom des Energiespeichersystems ermöglicht, und zum anderen, sofern eine Erwärmung durch externe Wärmequellen erforderlich ist, einen höheren Wärmestrom in das Energiespeichersystem zulässt. Dies bedeutet eine Steigerung des Anwendungsspektrums des Energiespeichersystems.

Bei herkömmlichen Wärmeleitelementen kann zudem das Problem auftreten, dass durch hydrophile Materialeigenschaften des Wärmeleitelements, dessen elektrische Leitfähigkeit durch Aufnahme von kondensiertem Wasser erhöht werden kann, wobei die Kondensation beispielsweise innerhalb des Energiespeichersystems stattfinden kann.

Außerdem könnte sich Wasserdampf - sogar in sehr kleinen Oberflächen-Rauhigkeitsstrukturen zwischen den Oberflächen des herkömmlichen Wärmeleitelements und den Oberflächen der Energiespeicherzellen bzw. des Wärmeübertragers - parallel zu diesen Oberflächen bewegen und an Stellen, an denen die Temperatur der Oberfläche geringer ist als die Temperatur des Wasserdampfes, kondensieren. Dadurch kann ebenfalls die elektrische Leitfähigkeit zwischen den Energiespeicherzellen und dem Wärmeübertrager erhöht werden. Zudem kann das entstandene Kondensat negative Effekte auf den Oberflächen der Energiespeicherzellen bzw. dem Wärmeübertrager sowie auf den Oberflächen des Wärmeleitelements bewirken.

Diese Probleme werden mit der erfindungsgemäßen Verstärkungsschicht gelöst, welche auf einer Oberfläche des Wärmeübertragers angeordnet ist, und zwar zwischen dem Wärmeübertrager und dem Wärmeleitelement, da die Verstärkungsschicht zum einen die Funktion der elektrischen Isolation zumindest zum Teil, insbesondere zum größten Teil bzw. vollständig, übernimmt, und weil zwischen die Verstärkungsschicht und den Wärmeübertrager keine Feuchtigkeit - wie beispielsweise das kondensierte Wasser - gelangen kann.

Dadurch dass zwischen den Energiespeicherzellen, dem Wärmeleitelement und dem Wärmeübertrager mit der Verstärkungsschicht bevorzugt jeweils eine Flächenpressung ausgebildet ist, welche unter anderem von E-Modul, Dicke und Fläche des Wärmeleitelements und einer Kraft, welche durch die Oberfläche(n) der Energiespeicherzelle(n) auf das Wärmeleitelement wirkt und von dem Wärmeübertrager aufgenommen wird, abhängen kann, wird eine durchgehende, sichere Kontaktierung bereitgestellt. Die Verstärkungsschicht ist darüber hinaus derart ausgebildet, elektrisch zu isolieren und durch die hohe mechanische Widerstandskraft der Verstärkungsschicht ein Durchdringen leitender Elemente, insbesondere einen direkten Kontakt zwischen den Energiespeicherzellen und dem Wärmeübertrager, zu verhindern.

Darüber hinaus soll die Verstärkungsschicht bevorzugt möglichst hart, d. h. zumindest im Wesentlichen unverformbar, sein. Dennoch können die elastischen Eigenschaften des Temperaturmanagement-Systems, insbesondere des Wärmeübertragers mit der Verstärkungsschicht, nahezu gleichbleibend aufrechterhalten werden, und zwar bei gleichzeitig hoher Oberflächenhärte des Wärmeübertragers mit der Verstärkungsschicht.

Insbesondere kann dadurch eine Biegung des Wärmeübertragers und dadurch ein Ablösen des Wärmeleitelements von der Vielzahl von Energiespeicherzellen auf der einen Seite und von dem Wärmeübertrager auf der anderen Seite reduziert werden. Dadurch wird auch die Gefahr eines Kurzschlusses von einzelnen Energiespeicherzellen im Energiespeichermodul verringert.

Somit wird durch das Vorsehen einer solchen Verstärkungsschicht die Sicherheit des gesamten Energiespeichersystems verbessert, und zwar dadurch, dass selbst in einem Fall, in welchem mindestens eine Energiespeicherzelle das Wärmeleitelement beispielsweise aufgrund von über einen längeren Zeitraum anhaltenden äußeren mechanischen Kräften durchdringt, zum einen eine elektrische Isolation gewährleistet wird, während jedoch weiterhin ein Wärmestrom von den bzw. zu den Energiespeicherzellen aufrechterhalten wird. Dadurch kann kein zusätzlicher elektrischer Strom zwischen zwei, das Wärmeleitelement durchdringenden Energiespeicherzellen fließen, was vor einer irreversiblen Schädigung der Energiespeicherzellen, sowie von benachbarten Energiespeicherzellen und des Energiespeichersystems durch Überhitzung der Energiespeicherzellen bzw. des Energiespeichersystems schützt.

Darüber hinaus ist es durch das Vorsehen der Verstärkungsschicht möglich, das Wärmeleitelement dünn auszubilden, da die Verstärkungsschicht unter anderem die Funktion der elektrischen Isolation zumindest zum Teil übernimmt, vorzugsweise zum größten Teil bzw. vollständig übernimmt. Dies geht dabei vorteilhafterweise mit einer Absenkung des Wärmewiderstands einher, welcher unter anderem von der Dicke, und den thermischen Eigenschaften der mit einem Wärmestrom zu durchlaufenden Elemente abhängt. Ein geringerer Wärmewiderstand ermöglicht wiederum einen höheren Wärmestrom von den bzw. zu den Energiespeicherzellen. Dies ermöglicht abermals, dass höhere elektrische Ströme von dem Energiespeichersystem abgegeben, bzw. dem Energiespeichersystem zugeführt werden können.

Ein Verringern der Dicke des Wärmeleitelements wiederum geht vorteilhafterweise mit einer Verringerung des gesamten Bauraums des Energiespeichersystems einher. Darüber hinaus stellt die Aufteilung der Funktion der elektrischen Isolation auf das Wärmeleitelement und die Verstärkungsschicht eine Erhöhung der Sicherheit dar, da im Falle dass beispielsweise das Wärmeleitelement von einer oder mehreren Energiespeicherzellen durchbrochen wird, die Funktion der elektrischen Isolation weiterhin von der Verstärkungsschicht übernommen wird. Auch muss dazu kein weiteres (zusätzliches) Element vorgesehen werden, wodurch die Gesamtanzahl an Elementen in dem Energiespeichersystem vorteilhafterweise gering gehalten werden kann.

Gemäß einem weiteren Aspekt der Erfindung kann die Verstärkungsschicht stoffschlüssig mit dem Wärmeübertrager verbunden sein. Der verbesserte Übergang zwischen der Verstärkungsschicht und dem Wärmeübertrager geht dabei mit einer verbesserten Wärmeleitung einher.

Gemäß einem weiteren Aspekt der Erfindung kann die Verstärkungsschicht aus einer Keramik oder einer keramischen Substanz gebildet sein, insbesondere aus einer Oxidkeramik. Das Vorsehen einer Verstärkungsschicht aus einer Keramik oder einer keramischen Substanz liefert den Vorteil, dass die Stabilität der Oberfläche des Wärmeübertragers verbessert wird, da Keramik über hohe mechanische Eigenschaften verfügt, die einen großen Widerstand gegen Deformationen von Oberflächenstrukturen bewirken.

Gemäß einem weiteren Aspekt der Erfindung kann die Verstärkungsschicht zumindest bereichsweise, insbesondere vollständig, eine Aluminiumoxid (Al₂O₃)-Schicht sein. Eine solche Aluminiumoxid-Schicht geht mit einer einfachen Fertigung einher, sowie mit guten Eigenschaften, und zwar mit hohen mechanischen Eigenschaften, sowie einer guten Wärmeleitfähigkeit und hohem elektrischen Widerstand. Dadurch erhöht sich vorteilhafterweise die mechanische Stabilität des Wärmeübertragers und gleichzeitig kann auch eine Kurzschluss-Gefahr der Energiespeicherzellen gesenkt werden.

Gemäß einem weiteren Aspekt der Erfindung kann der Wärmeübertrager aus einem oxidierbaren Metall, insbesondere aus Aluminium und/oder einer Aluminiumlegierung gebildet sein. Dies verbessert vorteilhafterweise die Wärmeleitfähigkeit des Temperaturmanagement-Systems des Energiespeichermoduls. Gleichzeitig kann die Verstärkungsschicht vorteilhafterweise stabil mit dem Wärmeübertrager verbunden werden.

Gemäß einem weiteren Aspekt der Erfindung kann der Wärmeübertrager Strömungskanäle und/oder geometrische Strukturen, insbesondere Lamellen, zur Vergrößerung einer äußeren und/oder inneren Oberfläche des Wärmeübertragers aufweisen, wobei durch die Strömungskanäle ein Fluid fließt, insbesondere Gas, Gasgemisch, Gas-Flüssigkeitsgemisch, Wasser oder eine Wasser-Glykol-Mischung. Dadurch verbessert sich vorteilhafterweise die Wärmeabfuhr bzw. die Wärmezufuhr von den bzw. zu den Energiespeicherzellen. Insbesondere kann dann, wenn während eines Betriebs des Energiespeichermoduls Wärme in den Energiespeicherzellen entsteht, die Wärme einfach aus dem Energiespeichermodul abgeführt werden. Es ist gegebenenfalls auch denkbar, bei tiefen Außentemperaturen Wärme dem Energiespeichermodul zuzuführen, um eine optimale Betriebstemperatur, insbesondere einen optimalen Temperaturbereich, zu gewährleisten.

Es ist allerdings genauso gut denkbar, Latentwärmespeicherstoffe, wie zum Beispiel Zeolithe, anstelle des Fluids vorzusehen.

Gemäß einem weiteren Aspekt der Erfindung kann das Wärmeleitelement aus einem Silikon oder einem Silikon-basierten Material gebildet sein. Dies liefert den Vorteil, dass eine gute Kontaktierung zwischen dem Wärmeleitelement und der Vielzahl von Energiespeicherzellen auf der einen Seite und der Verstärkungsschicht auf der anderen Seite ausgebildet wird. Durch die Elastizität des Silikons bzw. des Silikon-basierten Materials können darüber hinaus Toleranzschwankungen und/oder Längenänderungen der Energiespeicherzellen ausgeglichen werden. Dies führt zu einer zuverlässigeren Wärmeleitung aus bzw. in das Energiespeichermodul.

Gemäß einem weiteren Aspekt der Erfindung kann das Wärmeleitelement aus einem Thermoplast-basierten Material gebildet sein. Auch hier kann über die Elastizität des Thermoplast-basierten Materials ein guter Kontakt zwischen dem Wärmeleitelement und den Zellen bzw. dem Wärmeleitelement und der Verstärkungsschicht ausgebildet werden, wodurch wiederum die Wärmeleitfähigkeit aus dem bzw. in das Energiespeichermodul verbessert wird. Zudem sind Thermoplast-basierte Materialien einfach zu verarbeiten, was die Fertigungskosten vorteilhafterweise senken kann.

Es ist aber genauso gut denkbar, dass das Wärmeleitelement eine oder mehrere Lackschicht(en) aufweist, bzw. aus einer oder mehreren Lackschicht(en) besteht, wobei die Lackschicht(en) vorzugsweise gute thermische Eigenschaften, insbesondere eine hohe thermische Leitfähigkeit, aufweisen. Des Weiteren können auch die äußeren Oberflächen des Wärmeübertragers mit der Verstärkungsschicht und/oder die äußeren Oberflächen der Energiespeicherzellen eine oder mehrere Lackschicht(en) aufweisen. Dadurch kann vorteilhafterweise die Dicke des Wärmeleitelements verringert werden, und somit der thermische Widerstand zwischen den Energiespeicherzellen und dem Wärmeübertrager, welcher unter anderem von der Dicke der zu durchlaufenden Elemente abhängt, verringert werden. Auch kann eine Lackschicht vorteilhafterweise einfach hergestellt und aufgetragen werden, was mit einer Reduzierung der Fertigungs- und Montagekosten einhergeht.

Gemäß einem weiteren Aspekt der Erfindung kann das Wärmeleitelement als Wärmeleitpaste oder als Wärmeleitpad ausgebildet sein.

Gemäß einem weiteren Aspekt der Erfindung kann das Energiespeichermodul ein Gehäuse zum Aufnehmen der Vielzahl von Energiespeicherzellen in einem Innenraum des Gehäuses aufweisen, wobei das Gehäuse eine Oberseite, eine Unterseite und eine die Oberseite und die Unterseite verbindende Vielzahl von Seitenwandelementen aufweist, wobei die Seitenwandelemente umlaufend derart miteinander verbunden sind, dass die Seitenwandelemente den Innenraum begrenzen und wobei die Unterseite und die Oberseite zumindest bereichsweise, insbesondere vollständig, offen ausgebildet sind. Dadurch ergibt sich der Vorteil, dass der Innenraum des Gehäuses von zwei Seiten zugänglich ist. Dadurch kann der Zusammenbau eines solchen Energiespeichermoduls vereinfacht werden. Zudem wird auch eine Wartung oder ein Austauschen einzelner Komponenten des Energiespeichersystems, wie beispielsweise von einzelnen Energiespeicherzellen, erleichtert.

Auch ist es durchaus denkbar, dass der Innenraum des Gehäuses zumindest an der Oberseite bereits vollständig begrenzt, d. h. geschlossen, ist. Ein vollständig begrenzter Innenraum ermöglicht es vorteilhafterweise, Stoffströme zu definieren bzw. zu kontrollieren. Daraus ergibt sich zum einen, dass ein Ein- und/oder Austreten von Feuchtigkeit nur definiert über entsprechende Bauelemente (beispielsweise Durchführungseinheit, Entfeuchtungseinheit, Ventil etc.) zugelassen wird, zum anderen wird ein definiertes Austreten von Stoffen, welche aus dem Zellinnenraum in den Innenraum des Moduls gelangt sind, an die Umgebung (Venting) ermöglicht.

Gemäß einem weiteren Aspekt der Erfindung kann das Gehäuse mit dem Temperaturmanagement-System verbindbar oder verbunden sein, insbesondere über die Verstärkungsschicht mit dem Wärmeübertrager verbindbar oder verbunden sein, und zwar derart, dass die Unterseite des Gehäuses mit Hilfe des Temperaturmanagement-Systems verschlossen wird. Dadurch können vorteilhafterweise verschiedene Funktionen in ein Element integriert werden, was die Gesamtzahl an Komponenten vorteilhafterweise reduziert.

Gemäß einem weiteren Aspekt der Erfindung kann die Oberseite des Gehäuses derart ausgebildet sein, um mit Hilfe eines Deckelelements verschlossen zu werden, wobei das Deckelelement bevorzugt einen positiven Anschlusspol und einen negativen Anschlusspol aufweist. Dadurch kann vorteilhafterweise ein Einführen von Energiespeicherzellen bzw. ein Austauschen von Energiespeicherzellen erleichtert werden, da diese von oben zugänglich sind.

In diesem Zusammenhang sei darauf hingewiesen, dass auch bei einem verschlossen Gehäuse ein definierter Stofftransport, d. h. ein Transport von definierten Stoffen bei definierten Bedingungen, in den Innenraum des Gehäuses, bzw. aus dem Innenraum des Gehäuses ermöglicht ist.

Gemäß einem weiteren Aspekt der Erfindung können die Energiespeicherzellen Lithium-Ionen-Zellen sein, wobei die Energiespeicherzellen vorzugsweise als Lithium-Ionen-Pouch-Zellen ausgebildet sind.

Es ist allerdings genauso gut vorstellbar, die Energiespeicherzellen aus den Folgenden auszuwählen: Rundzellen, prismatische Energiespeicherzellen aus gefalteten Elektroden und/oder prismatische Energiespeicherzellen aus gestapelten Elektroden, wobei prismatische Energiespeicherzellen aus gestapelten Elektroden in diesem Zusammenhang die beste Performance aufweisen.

Gemäß einem weiteren Aspekt der Erfindung können die Energiespeicherzellen als Jelly-Rolls ausgebildet sein. Dadurch kann der Platzverbrauch vorteilhafterweise reduziert werden, und zwar ohne die Leistung bzw. Kapazität zu reduzieren.

Gemäß einem weiteren Aspekt der Erfindung kann das Energiespeichermodul ferner einen Elektronik-Träger aufweisen, welcher dazu ausgebildet ist, eine Vielzahl von elektronischen Einrichtungen, wie z.B. eine Vielzahl von Sensoren, mindestens einen Prozessor und/oder mindestens eine Speichereinrichtung, aufzunehmen. Dadurch lassen sich elektronische Einrichtungen einfach innerhalb des Energiespeichermoduls anordnen, und zwar ohne einen unnötig hohen Verkabelungsaufwand zu verursachen. Das kann zum einen die Produktion und das Zusammenbauen des Energiespeichermoduls vereinfachen und kann zudem noch die Kosten senken.

Gemäß einem weiteren Aspekt der Erfindung kann das Energiespeichermodul eine oder mehrere Sammelschiene(n) zum elektrischen Verbinden der Vielzahl von Energiespeicherzellen aufweisen.

Gemäß einem weiteren Aspekt der Erfindung kann das Energiespeichermodul ferner eine Messleitung zum Abgreifen von Strom- und/oder Spannungswerten einzelner, mehrerer und/oder aller Energiespeicherzellen aufweisen. Dadurch kann vorteilhafterweise die Funktionsfähigkeit des Energiespeichermoduls bzw. einzelner Energiespeicherzellen überwacht werden.

Gemäß einem weiteren Aspekt der Erfindung kann ein Energiespeichersystem angegeben sein, welches mindestens ein oben beschriebenes Energiespeichermodul und ein Systemgehäuse zum Aufnehmen des mindestens einen Energiespeichermoduls aufweist. Das Energiespeichermodul weist dabei ein Temperaturmanagement-System auf, welches einen Wärmeübertrager und ein Wärmeleitelement aufweist. Zwischen dem Wärmeübertrager und dem Wärmeleitelement ist eine Verstärkungsschicht vorgesehen, wobei die Verstärkungsschicht einen höheren Elastizitätsmodul aufweist als der Wärmeübertrager.

Durch das Vorsehen eines erfindungsgemäßen Temperaturmanagement-Systems können die bekannten Probleme gelöst werden. So führt eine Verstärkungsschicht zwischen dem Wärmeleitelement und dem Wärmeübertrager zu einer höheren mechanischen und thermischen Stabilität der Oberfläche des Wärmeübertragers. Dadurch dass zwischen den Energiespeicherzellen, dem Wärmeleitelement und dem Wärmeübertrager mit der Verstärkungsschicht jeweils eine Flächenpressung ausgebildet ist, welche unter anderem von dem E-Modul, der Dicke und der Fläche des Wärmeleitelements und einer Kraft, welche durch Oberflächen der Energiespeicherzellen auf das Wärmeleitelement wirkt und von dem Wärmeübertrager aufgenommen wird, abhängen kann, wird eine durchgehende, sichere Kontaktierung bereitgestellt. Die Verstärkungsschicht ist darüber hinaus derart ausgebildet, elektrisch zu isolieren und durch deren hohe mechanische Widerstandskraft ein Durchdringen leitender Teile, insbesondere einen direkten Kontakt zwischen den Energiespeicherzellen und dem Wärmeübertrager, zu verhindern.

Des Weiteren wird auch die Wärmeleitfähigkeit des Temperaturmanagement-Systems, insbesondere durch eine geeignete Wahl der Verstärkungsschicht, nicht beeinträchtigt, wodurch weiterhin Wärme aus dem Energiespeichermodul abgeführt bzw. Wärme in das Energiespeichermodul zugeführt werden kann.

Darüber hinaus soll die Verstärkungsschicht bevorzugt möglichst hart, d. h. zumindest im Wesentlichen unverformbar, sein. Dennoch können die elastischen Eigenschaften des Temperaturmanagement-Systems, insbesondere des Wärmeübertragers mit der Verstärkungsschicht, nahezu gleichbleibend aufrechterhalten werden, und zwar bei gleichzeitig hoher Oberflächenhärte des Wärmeübertragers mit der Verstärkungsschicht.

Die Erfindung wird nachstehend, auch hinsichtlich weiterer Merkmale und Vorteile, anhand der Beschreibung von Ausführungsformen unter Bezugnahme auf die beiliegenden Zeichnungen näher erläutert.

Diese zeigen in:
- FIG. 1: eine schematische Darstellung eines Fahrzeugs; und
- FIG. 2: eine schematische Darstellung eines Energiespeichersystems gemäß der vorliegenden Erfindung.

Nachfolgend wird das erfindungsgemäße Energiespeichersystem unter Bezugnahme auf die Darstellungen in den Figuren genauer beschrieben. Gleiche oder gleichwirkende Elemente und Funktionen sind mit denselben oder ähnlichen Bezugszeichen versehen.

Energiespeichersysteme, welche auf Lithium-Ionen-Technologien basieren, eignen sich insbesondere zum Einsatz in Fahrzeugen 200. Des Weiteren kann ein solches Energiespeichersystem ebenfalls überall dort eingesetzt werden, wo Energiespeichersysteme mit einer relativ hohen Leistungsdichte und/oder mit einer relativ hohen Energiedichte gefordert sind. Derartige Energiespeichersysteme weisen zumeist mindestens ein Energiespeichermodul 100 auf.

Im Folgenden wird das Energiespeichersystem derart beschrieben, dass relative Begriffe auf den Einbau-Zustand des Energiespeichersystems bezogen sind. So bedeutet beispielsweise "in einem oberen Bereich" in einem im eingebauten Zustand gesehenen oberen Bereich, "in einem seitlichen Bereich" in einem im einge-bauten Zustand und in Fahrtrichtung gesehenen Bereich, der sich in einem vorderen, hinteren, linken oder rechten Bereich befindet, und "in einem unteren Bereich" in einem im eingebauten Zustand gesehenen unteren Bereich.

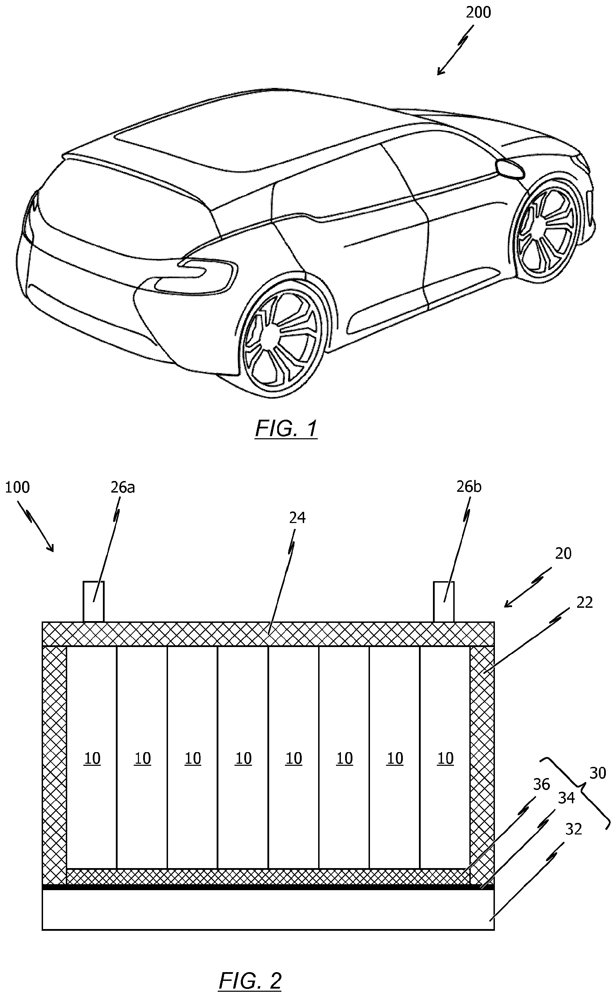

FIG. 1 zeigt eine schematische Darstellung eines Fahrzeugs 200. Das Energiespeichersystem kann hierbei in einem in Fahrtrichtung vorderen Bereich des Fahrzeugs 200, in einem hinteren Bereich des Fahrzeugs 200 und/oder in einem Bereich unterhalb der Sitze, insbesondere unterhalb des Fahrersitzes angeordnet sein.

Das Fahrzeug 200 kann ein Luft- oder Wasserfahrzeug, ein spurgeführtes Fahrzeug, ein Geländefahrzeug, oder bevorzugt ein Straßenfahrzeug sein, wobei unter Straßenfahrzeug ein Personenkraftwagen, ein Lastkraftwagen, ein Bus oder ein Wohnmobil verstanden werden kann. Es ist allerdings genauso gut denkbar, dass das Fahrzeug 200 auch als jedwede Baumaschine, E-Roller, E-Fahrrad, Rasenmäher, Rollstuhl oder dergleichen ausgebildet sein kann.

Das Fahrzeug 200 wird durch eine Antriebseinheit angetrieben. Die Antriebseinheit kann einen Stirlingmotor, einen Verbrennungsmotor, einen Elektromotor oder eine Kombination davon umfassen. Ein Fahrzeug 200, welches ausschließlich mit einem Elektromotor angetrieben wird, wird als Elektro-Fahrzeug bezeichnet. Ein Fahrzeug 200, welches sowohl einen Elektromotor als auch einen Verbrennungsmotor aufweist, wird als Hybrid-Fahrzeug bezeichnet. Hybrid-Fahrzeuge können ferner in Mikrohybrid-Fahrzeuge, Mildhybrid-Fahrzeug, Vollhybrid-Fahrzeuge und/oder Plug-In-Hybrid-Fahrzeuge untergliedert werden. Hierbei kann unter Plug-In-Hybrid-Fahrzeugen jedwedes Hybridfahrzeug verstanden werden, welches nicht nur über den Verbrennungsmotor aufgeladen wird, sondern ebenfalls über das Stromnetz oder andere nicht an ein Stromnetz gebundene Energiequellen geladen werden kann. Unter Vollhybrid-Fahrzeugen werden Fahrzeuge verstanden, die allein über den Elektromotor angetrieben werden können. Mikrohybrid-Fahrzeuge verfügen über eine Start-Stopp-Funktionalität, und vorzugsweise ebenso über eine Stopp-In-Motion-Funktionalität. Des Weiteren können Mikrohybrid-Fahrzeuge das Energiespeichersystem über eine sogenannte Bremsenergierückgewinnung aufladen. Mildhybrid-Fahrzeuge können darüber hinaus über eine Boost-Funktion verfügen, welche zur Unterstützung des Verbrennungsmotors zur Leistungssteigerung verwendet wird.

FIG. 2 zeigt eine schematische Schnittdarstellung eines erfindungsgemäßen Energiespeichermoduls 100. Demnach ist in einem Innenraum eines Gehäuses 20 des Energiespeichermoduls 100 eine Vielzahl von Energiespeicherzellen 10 angeordnet. Das Gehäuse 20 weist dabei eine Oberseite und eine Unterseite auf, wobei zwischen der Oberseite und der Unterseite eine Vielzahl von Seitenwandelementen 22 angeordnet sind, welche derart umlaufend miteinander verbunden sind, dass die Seitenwandelemente 22 den Innenraum des Gehäuses 20 begrenzen. Die Oberseite und die Unterseite sind zumindest bereichsweise, insbesondere vollständig, offen ausgebildet.

Dabei ist vorgesehen, dass die Oberseite mit Hilfe eines Deckelelements 24 verschlossen werden kann. Das Deckelelement 24 kann dabei einen positiven Anschlusspol 26a und einen negativen Anschlusspol 26b aufweisen. Der positive Anschlusspol 26a bzw. der negative Anschlusspol 26b kann dabei mit den entsprechenden Elektroden der Energiespeicherzellen 10 verbunden sein, und zwar derart, dass der von den Energiespeicherzellen 10 abgegebene Strom an elektrische Verbraucher oder Lasten abgegeben werden kann, welche mit dem positiven und dem negativen Anschlusspol 26a, 26b verbunden sind, bzw. dass über den positiven und negativen Anschlusspol 26a, 26b Energie den Energiespeicherzellen 10 von außen zugeführt werden kann, beispielsweise während eines Ladevorgangs.

Das Deckelelement 24 kann aber genauso gut anstelle des positiven und des negativen Anschlusspoles 26a, 26b eine zumindest im Wesentlichen ebene positive und eine negative elektrische Kontaktierungsfläche aufweisen. Dies reduziert vorteilhafterweise die Größe, insbesondere die Höhe, des Energiespeichermoduls 100.

Das Deckelelement 24 kann dabei stoff- und/oder kraftschlüssig mit der Vielzahl von Seitenwandelementen 22 verbunden werden. Beispielsweise kann das Deckelelement 24 über eine Schraubverbindung mit den Seitenwandelementen 22 verbunden werden.

Das Gehäuse 20, d. h. die Vielzahl von Seitenwandelementen 22 und das Deckelelement 24, können zumindest bereichsweise, insbesondere vollständig, aus Kunststoff gefertigt sein, um das Energiespeichermodul 100 mit möglichst geringem Gewicht herstellen zu können. Als Material kann dabei beispielsweise ein Acryl-Butadien-Styrol, Polycarbonat, Polyamid, Polyvinylchlorid, Polyethylenterephthalat, Polyoxymethylen, Polyolefin oder ein Copolymer hiervon gewählt werden. Auch ist denkbar, dass das Gehäuse 20 aus Glas, Wasserglas, Keramik oder dergleichen gefertigt ist. Es ist dabei zu beachten, dass der positive und negative Anschlusspol 26a, 26b, bzw. die positive und negative elektrische Kontaktierungsfläche des Deckelelements 24 aus elektrisch leitfähigem Material gefertigt sind.

Um das Gehäuse 20, insbesondere das Gehäuse 20 aus Kunststoff, ferner gegenüber der Umgebung abdichten zu können, kann dabei zusätzlich eine an dem Gehäuse 20 in Richtung des Innenraums angeordnete Barriereschicht zum Abdichten vorgesehen sein. Die Barriereschicht ist dabei derart ausgelegt, dass sie gegenüber von Gasen und/oder Flüssigkeiten nicht oder nur geringfügig durchlässig ist. Eine solche Barriereschicht kann aus Metall, Metalloxid und/oder Silikaten aufgebaut sein, insbesondere Aluminium und/oder Aluminiumoxid. Die Barriereschicht ist dabei vorteilhafterweise stoffschlüssig mit dem Gehäuse 20 in Richtung des Innenraums stoffschlüssig verbunden, beispielsweise kann die Barriereschicht auf Innenflächen des Gehäuses 20 gedampft sein.

Die Unterseite des Gehäuses 20 kann mit Hilfe eines Temperaturmanagement-Systems 30 verschlossen oder verschließbar sein. Das Temperaturmanagement-System 30 ist dazu ausgelegt, den Innenraum des Energiespeichermoduls 100 bzw. des Energiespeichersystems, insbesondere die Vielzahl von Energiespeicherzellen 10, in einem vorab festgelegten oder festlegbaren Temperaturbereich zu halten, welcher einem optimalen Arbeitstemperaturbereich der Vielzahl von Energiespeicherzellen 10 entspricht. Ein vorab festgelegter oder festlegbarer Temperaturbereich beträgt beispielsweise -20 °C bis 60 °C, bevorzugt -10 °C bis 40 °C, besonders bevorzugt 0 °C bis 30 °C.

Das Temperaturmanagement-System 30 weist dabei einen Wärmeübertrager 32 und ein Wärmeleitelement 36 auf. Zwischen dem Wärmeübertrager 32 und dem Wärmeleitelement 36 ist dabei zumindest bereichsweise, insbesondere auf der gesamten Oberfläche des Wärmeübertragers 32, eine Verstärkungsschicht 34 zum strukturellen Verstärken der Oberfläche des Wärmeübertragers 32 vorgesehen.

Die Verstärkungsschicht 34 ist dabei auf einer Oberfläche des Wärmeübertragers 32 in Richtung des Innenraums des Gehäuses 20 bzw. in Richtung der Vielzahl von Energiespeicherzellen 10 angeordnet. Die Verstärkungsschicht 34 kann dabei insbesondere stoffschlüssig mit dem Wärmeübertrager 32 verbunden sein.

Die Verstärkungsschicht 34 kann dabei eine Schichtdicke von 50 µm bis 500 µm aufweisen, bevorzugt 100 µm bis 400 µm, besonders bevorzugt 150 µm bis 300 µm, ganz besonders bevorzugt etwa 200 µm.

Des Weiteren ist es denkbar, dass zwischen zwei benachbarten Energiespeicherzellen 10 bzw. zwischen einer Energiespeicherzelle 10 und einer benachbarten Seitenwand des Gehäuses 20 mit Aluminiumoxid beschichtete Aluminiumbleche vorgesehen sind, um die Wärme von den seitlichen Oberflächen der Energiespeicherzellen 10 in Richtung des Temperaturmanagement-Systems 30 zu transportieren, bzw. um die Wärme von dem Temperaturmanagement-System 30 zu den seitlichen Oberflächen der Energiespeicherzellen 10 zu transportieren.

Die Verstärkungsschicht 34 weist einen höheren Elastizitätsmodul auf als der Wärmeübertrager 32. Das Vorsehen einer solchen Verstärkungsschicht 34 erhöht somit die mechanische Stabilität der Oberfläche des Wärmeübertragers 32 stark. Es ist allerdings zu beachten, dass der Effekt der strukturellen Oberflächenverstärkung des Wärmeübertragers 32 nur in einem Bereich in der Nähe der Verstärkungsschicht 34 auftritt; dieser Effekt nimmt über die Dicke des Wärmeübertragers 32 gesehen mit einer steigenden Entfernung von der der Verstärkungsschicht 34 zugewandten Oberfläche ab. Gleichzeitig verfügt die Verstärkungsschicht 34 über eine relativ hohe Wärmeleitfähigkeit bei einem hohen elektrischen Widerstand, was wiederum einen Schutz der Energiespeicherzellen 10 vor etwaigen Kurzschlüssen darstellt.

Dabei ist anzumerken, dass die Verstärkungsschicht 34 die Funktion der elektrischen Isolation zum größten Teil bzw. vollständig übernimmt. In diesem Zusammenhang haben Versuche gezeigt, dass der elektrische Widerstand der Verstärkungsschicht 34 im Gigaohm-Bereich liegt.

Beispielsweise wurde festgestellt, dass beim Anlegen einer 12 Volt Spannung an eine erfindungsgemäße Verstärkungsschicht 34 ein elektrischer Strom von 0,12 Nanoampere fließt, was einem elektrischen Widerstand von 100 Gigaohm entspricht, und dass beim Anlegen einer 400 Volt Spannung an eine erfindungsgemäße Verstärkungsschicht 34 ein elektrischer Strom von 0,4 Mikroampere fließt, was einem elektrischen Widerstand von 1 Gigaohm entspricht.

Andere Versuche zeigten beispielsweise, dass bei einer Temperatur von 20 Grad Celsius beim Anlegen einer 12 Volt Spannung an eine erfindungsgemäße Verstärkungsschicht 34 mit einer Dicke von 200 Mikrometer und mit einer Fläche von 0,01 Quadratmeter ein elektrischer Strom von 0,6 Nanoampere fließt, was einem elektrischen Widerstand von 20 Gigaohm entspricht. Auch beim Anlegen einer 400 Volt Spannung weist eine erfindungsgemäße Verstärkungsschicht 34 mit einer Dicke von 200 Mikrometer und mit einer Fläche von 0,01 Quadratmeter einen elektrischen Widerstand von 20 Gigaohm auf, was mit einem elektrischen Strom von 20 Nanoampere einhergeht.

Auch wurde überraschenderweise festgestellt, dass der elektrische Widerstand auch bei sehr hohen Temperaturen stabil und verhältnismäßig hoch bleibt. So konnte gezeigt werden, dass bei 1000 Grad Celsius beim Anlegen einer 12 Volt Spannung an eine erfindungsgemäße Verstärkungsschicht 34 mit einer Dicke von 200 Mikrometer und mit einer Fläche von 0,01 Quadratmeter ein elektrischer Strom von 60 Mikrometer fließt, was einem Widerstand von 200 Kiloohm entspricht. Der gleiche Wert für den elektrischen Widerstand konnte bei 1000 Grad Celsius auch beim Anlegen einer 400 Volt Spannung an eine erfindungsgemäße Verstärkungsschicht 34 mit einer Dicke von 200 Mikrometer und mit einer Fläche von 0,01 Quadratmeter ermittelt werden, was mit einem elektrischen Strom von 2 Milliampere einhergeht.

So können vorteilhafterweise die Folgen eines sogenannten "Thermal Runaway" abgeschwächt werden. Unter "Thermal Runaway" oder thermisches Durchgehen wird eine Überhitzung einer exothermen chemischen Reaktion oder eines technischen Systems aufgrund eines sich selbst verstärkenden, Wärme produzierenden Prozesses verstanden. Ein solches Durchgehen kann in der Regel eine Zerstörung des Systems (durch Überdruck) bewirken und in dessen Folge zu Brand oder Explosion führen. Insbesondere treten bei einem solchen Zustand Temperaturen von über 600 Grad Celsius auf. Während die schützenden Eigenschaften von herkömmlichen Wärmeleitelementen bei solch hohen Temperaturen sehr gering werden, so dass Energiespeicherzellen das Wärmeleitelement durchdringen können, bleibt die erfindungsgemäße Verstärkungsschicht 34 mechanisch, thermisch und elektrisch stabil. So kann die Sicherheit von Energiespeichermodulen 100 und/oder Energiespeichersystemen, welche ein Temperaturmanagement-System 30 mit einer erfindungsgemäßen Verstärkungsschicht 34 aufweisen, stark erhöht werden.

Darüber hinaus kann die Verstärkungsschicht 34 auch vor etwaigen Kurzschlüssen der Energiespeicherzellen schützen, und zwar beispielsweise in einem Fall, in welchem das Wärmeleitelement 36 versprödet und insbesondere durch das Einwirken äußerer Kräfte, wie zum Beispiel Vibrationen und/oder durch Vibration bedingte Stöße, bricht. In einem solchen Szenario kann es dann zu einer direkten Kontaktierung der Energiespeicherzellen 10 und der Verstärkungsschicht 34 (bzw. des Wärmeübertragers 32 mit der Verstärkungsschicht 34) kommen. Der hohe elektrische Widerstand der Verstärkungsschicht 34 verhindert dabei einen Kurzschluss.

Die Verstärkungsschicht 34 kann aus einer Keramik gebildet sein. Bevorzugt handelt es sich bei der Keramik um eine Oxidkeramik, beispielsweise Zirkonoxid (ZrO₂), Magnesiumoxid (MgO), Zirkonoxid verstärktes Aluminiumoxid (ZTA), oder Aluminiumoxid (Al₂O₃). Aufgrund der hohen mechanischen Eigenschaften von Keramiken, bzw. Oxidkeramiken, kann die mechanische Stabilität der Oberfläche des Wärmeübertragers 32, auf welchem die Verstärkungsschicht 34 angebracht ist, verbessert werden, wodurch insbesondere die Wärmeleitfähigkeit und der elektrische Widerstand relativ hoch bleiben, d. h. dass die Verstärkungsschicht 34 eine relativ hohe Wärmeleitfähigkeit aufweist und dennoch elektrisch isolierend ist.

Dabei bleiben vorteilhafterweise die elastischen Eigenschaften der darunterliegenden Schicht, d.h. des Wärmeübertragers 32, zumindest im Wesentlichen erhalten.

Die Verstärkungsschicht 34 kann insbesondere durch Umwandeln der Materialschicht an der äußersten Oberfläche des Wärmeübertragers 32 (in Richtung des Innenraums des Energiespeichermoduls 100) gefertigt werden, so dass die Verstärkungsschicht 34 und der Wärmeübertrager 32 eine stabile, stoffschlüssige Verbindung eingehen.

Gleichzeitig ist das Aufbringen einer solchen (Oxid)Keramik-Schicht bekannt, und dadurch einfach und kostengünstig durchzuführen, beispielsweise durch Sintern. Auch kann eine Schicht aus Aluminiumoxid beispielsweise mittels anodischer Oxidation (d. h. durch Eloxieren) auf einen Grundkörper aus Aluminium aufgebracht werden.

Der Wärmeübertrager 32 kann bevorzugt aus Aluminium und/oder einer Aluminium-Legierung gefertigt sein. Genauso gut kann der Wärmeübertrager 32 aber auch aus jedwedem anderen geeigneten, insbesondere oxidierbaren, Metall gefertigt sein.

Dabei weist Aluminium beispielsweise einen Elastizitätsmodul von etwa 70 GPa, Magnesium einen Elastizitätsmodul von etwa 40 GPa, Titan einen Elastizitätsmodul von etwa 116 GPa auf; der Elastizitätsmodul von Oxidkeramiken liegt etwa im Bereich von 150 GPa bis 450 GPa, bevorzugt 300 GPa bis 400 GPa, besonders bevorzugt 350 GPa bis 400 GPa. Aluminiumoxid weist dabei einen Elastizitätsmodul von 250 GPa bis 350 GPa auf.

Ferner kann der Wärmeübertrager 32 eine Vielzahl von geometrischen Strukturen, insbesondere Lamellen, zur Vergrößerung der äußeren und/oder inneren Oberfläche des Wärmeübertragers 32 aufweisen, um einen besseren Wärmeaustausch zu ermöglichen. Auch kann eine Vielzahl von Strömungskanälen, durch welche ein Fluid geführt wird, in dem Wärmeübertrager 32 vorgesehen sein. Als Fluid kann ein Gas oder ein Gasgemisch, insbesondere Luft, Wasser und/oder ein Wasser-Glykol-Gemisch verwendet werden. Des Weiteren ist es aber auch denkbar, dass anstelle des Fluids ein Latentwärmestoff vorgesehen ist, wie beispielsweise Zeolithe.

Insbesondere kann der Wärmeübertrager 32 dabei aus Aluminium gefertigt und mit einer Verstärkungsschicht 34 aus Aluminiumoxid versehen sein, welche mittels Eloxieren mit dem Wärmeübertrager 32 stoffschlüssig verbunden ist.

Das Temperaturmanagement-System 30 ist insbesondere dazu ausgelegt, eine während dem Betrieb der Energiespeicherzellen 10 entstehende Wärme aus dem Energiespeichermodul 100 abzuführen und/oder Wärme in das Energiespeichermodul 100 zuzuführen, um die Temperatur der Energiespeicherzellen 10 bzw. des Energiespeichermoduls 100 kontrolliert innerhalb eines vorab festgelegten oder vorab festlegbaren Temperaturbereich zu halten. Dazu stehen einige, insbesondere alle, Energiespeicherzellen 10 in direktem und/oder indirektem Kontakt mit dem Wärmeleitelement 36 des Temperaturmanagement-Systems 30. Das Wärmeleitelement 36 ist dabei dazu ausgelegt, zum einen Längentoleranzen bzw. Toleranzschwankungen und/oder Längenunterschiede der Energiespeicherzellen 10 und/oder Ungenauigkeiten beim Zusammensetzen des Energiespeichermoduls 100 auszugleichen, und zum anderen auch Unregelmäßigkeiten der Oberfläche der Verstärkungsschicht 34, welche mit dem Wärmeleitelement 36 in Kontakt steht bzw. kommt, auszugleichen. Die Energiespeicherzellen 10 können sich aufgrund von Wärmeentwicklung, sowie Änderungen der Elektrodendicke (der Energiespeicherzellen 10) durch Änderung der elektrischen Ladung, was insbesondere bei Pouch-Zellen eine wichtige Rolle spielt, und/oder unterschiedlicher Gasdrücke während des Betriebs ausdehnen und zusammenziehen. Eine solche Längenänderung, insbesondere wenn sich einzelne Energiespeicherzellen 10 unterschiedlich ausdehnen bzw. zusammenziehen als andere Energiespeicherzellen 10, kann über das Wärmeleitelement 36 ausgeglichen werden. Dadurch wird vorteilhafterweise eine durchgehend gute Kontaktierung zwischen der Vielzahl von Energiespeicherzellen 10 auf der einen Seite und der Verstärkungsschicht 34 und dem Wärmeübertrager 32 auf der anderen Seite gewährleistet.

Das Wärmeleitelement 36 ist zumindest bereichsweise auf der Verstärkungsschicht 34, insbesondere auf der Oberfläche der Verstärkungsschicht 34 in Richtung des Innenraums des Gehäuses 20 des Energiespeichermoduls 100, angeordnet, und zwar derart, dass das Wärmeleitelement 36 von den Seitenwandelementen 22 des Gehäuses 20 seitlich begrenzt wird. D. h. dass das Wärmeleitelement 36 in dem Innenraum des Gehäuses 20 zwischen den Energiespeicherzellen 10 und der Verstärkungsschicht 34 vorgesehen ist.

Das Wärmeleitelement 36 ist zwischen den Energiespeicherzellen 10 und der Verstärkungsschicht 34 vorgesehen, um insbesondere den Übergang zwischen den relativ harten Oberflächen von den Energiespeicherzellen 10 und der Verstärkungsschicht 34 zu verbessern. Dazu ist das Wärmeleitelement 36 im Vergleich zu der Verstärkungsschicht 34 und von Zellgehäusen, welche jeweils eine Energiespeicherzelle 10 umschließen, weicher und/oder elastischer ausgebildet. Dadurch können zum Beispiel statische und/oder dynamische Längenunterschiede der Energiespeicherzellen 10 ausgeglichen werden. In diesem Zusammenhang wird unter den statischen Längenunterschieden ein fertigungs- und/oder montagebedingter Längenunterschied der Energiespeicherzellen 10 zueinander, und unter den dynamischen Längenunterschieden eine durch äußere Umstände, wie beispielsweise einer betriebsbedingten Erwärmung der Energiespeicherzellen 10, hervorgerufene Längenänderung der einzelnen Energiespeicherzellen 10 verstanden.

Das Wärmeleitelement 36 kann hierbei z. B. als Wärmeleitpaste oder Wärmeleitpad ausgebildet sein. Dabei kann das Wärmeleitelement 36 aus einem Silikon oder einem Silikon-basierten Material gefertigt sein. Ebenso ist es aber auch denkbar, ein Thermoplast-basiertes Material zu verwenden. Beispielsweise kann eine Silikonmatte, eine Silikongummi-Folie mit optionalem Glasfasergewebe oder eine Kunststofffolie auf der Basis von Polyimiden, Polyethylenterephthalat, Polyamiden, und/oder Polycarbonat mit oder ohne Zusätze verwendet werden. Auch ist es denkbar, ein Silikonöl mit Bestandteilen von Zinkoxid und/oder Aluminiumoxid zu verwenden.

Genauso gut ist es denkbar, eine Lackschicht oder ein Lackschichtensystem, welches mindestens zwei (unterschiedliche und/oder gleiche) Lackschichten aufweist, als Wärmeleitelement 36 zu verwenden. Die Lackschicht oder das Lackschichtensystem weist dabei einen thermisch leitenden Lack auf, welcher Füllstoffe enthalten kann. Dadurch kann das Wärmeleitelement 36 vorteilhafterweise sehr dünn vorgesehen sein, was wiederum den thermischen Widerstand zwischen den Energiespeicherzellen 10 und dem Wärmeübertrager 32, welcher unter anderem von der Dicke der zu durchlaufenden Elemente (d. h. des Wärmeleitelements 32 und der Verstärkungsschicht 34) abhängt, senkt. Auch kann eine Lackschicht vorteilhafterweise einfach hergestellt und aufgetragen werden, was mit einer Reduzierung der Fertigungs- und Montagekosten einhergeht.

Auch können die äußeren Oberflächen des Wärmeübertragers 32 mit der Verstärkungsschicht 34 und/oder die äußeren Oberflächen der Energiespeicherzellen 10 mit einer oder mehreren Lackschicht(en) umgeben sein.

Des Weiteren ist es unter bestimmten Umständen denkbar, die Energiespeicherzellen 10 direkt auf dem Wärmeübertrager 32 mit der Verstärkungsschicht 34 anzuordnen, sofern zwischen jeweils benachbarten Energiespeicherzellen 10 eine elektrisch ausreichend hohe Isolation vorgesehen ist. In anderen Worten kann auf ein Wärmeleitelement 36 verzichtet werden, wenn eine ausreichend gute Wärmeleitfähigkeit zwischen den Energiespeicherzellen 10 und dem Wärmeübertrager 32 mit Verstärkungsschicht 34 vorgesehen ist. Dabei weisen bevorzugt sowohl die jeweils eine Energiespeicherzelle 10 umschließenden Zellgehäuse als auch der Wärmeübertrager 32 jeweils eine solche Verstärkungsschicht 34 auf. In einer solchen Ausführungsform können die Energiespeicherzellen 10 ohne weitere, zusätzliche Elemente angeordnet werden. Das ist vorteilhafterweise zumindest für stationäre Energiespeichersysteme von hoher Bedeutung, da das Wärmeleitelement 36 und weitere Elemente zur Isolation zwischen benachbarten Energiespeicherzellen 10 nicht mehr erforderlich sind, wodurch die Kosten verringert werden können. Des Weiteren wird der für das Energiespeichermodul 100 bzw. das Energiespeichersystem erforderliche Bauraum vorteilhafterweise reduziert.

Die einzelnen Energiespeicherzellen 10 mit einer erfindungsgemäßen Verstärkungsschicht 34 einzufassen (mit oder ohne Wärmeleitelement 36 zwischen den Energiespeicherzellen 10 und dem Wärmeübertrager 32 mit der Verstärkungsschicht 34) ergibt ferner den Vorteil, dass die Sicherheit des Energiespeichermoduls 100 und/oder des Energiespeichersystems weiter erhöht wird.

So kann bei herkömmlichen Energiespeichersystemen, beispielsweise in einem Fall, in welchem eine einzelne Energiespeicherzelle überhitzt, lokal eine sehr hohe Temperatur auf das Wärmeleitelement aufgebracht werden, wodurch das Wärmeleitelement lokal aufschmelzen kann. Infolge der steigenden Temperatur können angrenzende Energiespeicherzellen ebenfalls überhitzen und das Wärmeleitelement ferner schädigen. Dadurch können mehrere Energiespeicherzellen in direktem Kontakt mit dem Wärmeübertrager kommen, was zu einem Kurzschluss führt. Ein Aufbringen einer erfindungsgemäßen Verstärkungsschicht 34 zum einen auf dem Wärmeübertrager 32 und zum anderen an den die Energiespeicherzellen 10 einschließenden Zellgehäusen führt zu einer Erhöhung der Sicherheit des Energiespeichermoduls 100, da selbst wenn mehrere Energiespeicherzellen 10 das Wärmeleitelement 36 durchdringen der hohe elektrische Widerstand der Verstärkungsschicht 34 vor einem Kurzschluss schützt.

Das Energiespeichermodul 100 weist eine Vielzahl von Energiespeicherzellen 10 auf, wobei die Anzahl an Energiespeicherzellen 10 nicht auf die in FIG. 2 dargestellte Anzahl beschränkt ist. Es können genauso gut weniger oder mehr Energiespeicherzellen 10 in dem Energiespeichermodul 100 vorgesehen sein, je nach gewünschter Kapazität und/oder Spannung des Energiespeichermoduls 100.

Die Energiespeicherzellen 10 können dabei als Lithium-Ionen-Zellen ausgebildet sein, insbesondere Lithium-Ionen-Zellen, welche als Jelly-Roll-Zellen ausgebildet sind. Des Weiteren können die Energiespeicherzellen 10 mit einem eigenen oder ohne ein eigenes Zellengehäuse ausgebildet sein, auch können die Energiespeicherzellen 10 zur einfacheren Positionierung in dem Energiespeichermodul 100 in einem Zellenträger angeordnet werden. Um darüber hinaus einen möglichst geringen Platzverbrauch zu schaffen, sind die Energiespeicherzellen 10 insbesondere als Lithium-Ionen-Pouch-Zellen ausgebildet.

Genauso gut könnte man aber auch eine Vielzahl von Energiespeicherzellen 10 in einer tiefgezogenen Wärmeleitelementform aus eloxiertem Aluminium anordnen.

Es ist auch denkbar, Rundzellen, prismatische Energiespeicherzellen aus gefalteten Elektroden und/oder prismatische Energiespeicherzellen aus gestapelten Elektroden als Energiespeicherzellen 10 zu verwenden, wobei die prismatischen Energiespeicherzellen aus gestapelten Elektroden in diesem Zusammenhang die beste Performance aufweisen.

Um den Strom der einzelnen Energiespeicherzellen 10 gesammelt an den positiven bzw. negativen Anschlusspol 26a, 26b des Energiespeichermoduls 100, bzw. der positiven bzw. negativen Kontaktierungsfläche des Energiespeichermoduls 100, abzugeben, können die Energiespeicherzellen 10 über eine oder mehrere Sammelschiene(n) elektrisch miteinander verbunden werden, und zwar entweder elektrisch in Reihe verbunden werden oder elektrisch parallel verbunden werden.

Ferner kann in dem Energiespeichermodul 100 ein Elektronikträger vorgesehen sein. Dieser ist dazu ausgebildet, eine Vielzahl von elektrischen Einrichtungen, wie z. B. eine Vielzahl von Sensoren, beispielsweise Temperatursensoren, mindestens einen Prozessor und mindestens eine Speichereinrichtung, aufzunehmen.

Auch kann eine Messleitung zum Abgreifen von Strom- und/oder Spannungswerten einzelner, mehrerer und/oder aller Energiespeicherzellen 10 in dem Energiespeichermodul 100 vorgesehen sein. Dadurch lässt sich die Funktionsfähigkeit einzelner, mehrerer und/oder aller Energiespeicherzellen 10 in den Energiespeichermodul 100 vorteilhafterweise überwachen.

Auch wenn dies nicht explizit in den Figuren dargestellt ist, ist es denkbar, ein Energiespeichersystem mit mindestens einem oben beschriebenen Energiespeichermodul 100 und einem Systemgehäuse zum Aufnehmen des mindestens einen Energiespeichermoduls 100 auszubilden.

Es ist dabei denkbar, dass das Temperaturmanagement-System 30 nicht für jedes Energiespeichermodul 100 einzeln ausgebildet ist, sondern ein Temperaturmanagement-System 30 für das gesamte Energiespeichersystem, d. h. ein Temperaturmanagement-System 30 für mehrere Energiespeichermodule 100 anzugeben. Dabei wird die Verstärkungsschicht 34 insbesondere auf der gesamten Oberfläche des Wärmeübertragers 32 aufgebracht, während dagegen das Wärmeleitelement 36 beispielsweise pro Energiespeichermodul 100 vorgesehen wird, und zwar in einem Bereich, in welchem die jeweiligen Energiespeicherzellen 10 des jeweiligen Energiespeichermoduls 100 vorgesehen sind.

Genauso gut ist es auch denkbar, für jede einzelne Energiespeicherzelle 10 ein Wärmeleitelement 36 vorzusehen. Dabei können einzelne, flache Wärmeleitelemente 36 im Wesentlichen an einer in Längserstreckungsrichtung senkrechten Mittelachse gebogen werden, und zwar derart dass die Wärmeleitelemente 36 eine im Wesentlichen U-förmige Formgebung ausbilden. Dadurch können vorteilhafterweise von außen einwirkende mechanische Kräfte abgefedert werden, was die Gefahr des Durchdringens der Wärmeleitelemente 36 durch die Energiespeicherzellen 10 weiter verringert. Zusätzlich kann durch die elastische Rückstellkraft der federnden Wärmeleitelemente 36 auch die Kontaktierung zwischen den Energiespeicherzellen 10 und dem Wärmeübertrager 32 verbessert werden.

Um das Energiespeichersystem darüber hinaus möglichst platzsparend vorsehen zu können, weist das mindestens eine Energiespeichermodul 100 insbesondere eine positive bzw. negative elektrische Kontaktierungsfläche auf. Die jeweiligen positiven bzw. negativen elektrischen Kontaktierungsflächen der Energiespeichermodule 100 können mit jeweils einer positiven bzw. negativen Anschlussklemme des Energiespeichersystems elektrisch verbunden werden. An der positiven bzw. negativen Anschlussklemme des Energiespeichersystems werden elektrische Verbraucher oder elektrische Lasten angeschlossen.

Ein solches Energiespeichersystem ist zum Einsatz in einem Fahrzeug 200 ausgelegt, insbesondere zum Einsatz in einem Hybrid-Fahrzeug.

Es ist zu beachten, dass bei allen erfindungsgemäßen Ausführungsformen das Temperaturmanagement-System 30 die (multifunktionale) Verstärkungsschicht 34 (zwingend) aufweisen muss. Die Verstärkungsschicht 34 steht dabei in direktem Kontakt mit dem Wärmeübertrager 32. Die Verstärkungsschicht 34 ist in dem Fall, in welchem das Wärmeleitelement angeordnet ist bzw. die Wärmeleitelemente 36 angeordnet sind, (unmittelbar) zwischen dem Wärmeübertrager 32 und dem Wärmeleitelement 36 bzw. den Wärmeleitelementen 36 angeordnet, und ist in dem Fall, in welchem kein Wärmeleitelement 36 angeordnet ist, (unmittelbar) zwischen der Vielzahl von Energiespeicherzellen 10 und dem Wärmeübertrager 32 angeordnet.

Mit der Verstärkungsschicht 34 sind die folgenden (bereits beschriebenen) Vorteile verbunden: auf der einen Seite wird die mechanische Stabilität an der Oberfläche des Wärmeübertragers 32 in der Nähe der Verstärkungsschicht 34 erhöht; auf der anderen Seite wird mithilfe der Verstärkungsschicht 34 eine gute elektrische Isolation selbst bei sehr hohen Temperaturen ausgebildet. So weist die Verstärkungsschicht 34 einen hohen elektrischen Widerstand auf, der auch bei hohen Temperaturen stabil und verhältnismäßig hoch bleibt.

An dieser Stelle sei darauf hingewiesen, dass alle oben beschriebenen Teile für sich alleine gesehen oder in jedweder Kombination, insbesondere die in den Zeichnungen dargestellten Details, als erfindungswesentlich beansprucht werden. Abänderungen hiervon sind dem Fachmann geläufig.

### Bezugszeichenliste

- 10: Energiespeicherzelle
- 20: Gehäuse
- 22: Seitenwandelemente
- 24: Deckelelement
- 26a, 26b: positiver Anschlusspol, negativer Anschlusspol
- 30: Temperaturmanagement-System
- 32: Wärmeübertrager
- 34: Verstärkungsschicht
- 36: Wärmeleitelement
- 100: Energiespeichermodul
- 200: Fahrzeug

## Patentansprüche

1. Energiespeichermodul (100) zum Einsatz in einem Fahrzeug (200), insbesondere zum Einsatz in einem Hybrid-Fahrzeug, wobei das Energiespeichermodul (100) Folgendes aufweist:
- eine Vielzahl von Energiespeicherzellen (10); und
- ein zumindest einigen, bevorzugt allen, Energiespeicherzellen (10) zugeordnetes Temperaturmanagement-System (30),
wobei das Temperaturmanagement-System (30) einen Wärmeübertrager (32) und ein Wärmeleitelement (36) aufweist, wobei unmittelbar zwischen dem Wärmeübertrager (32) und dem Wärmeleitelement (36) eine Verstärkungsschicht (34) angeordnet ist, wobei die Verstärkungsschicht (34) einen höheren Elastizitätsmodul aufweist als der Wärmeübertrager (32), und wobei die Verstärkungsschicht (34) eine Oberfläche des Wärmeübertragers (32) direkt kontaktiert.

2. Energiespeichermodul (100) nach Anspruch 1,
wobei die Verstärkungsschicht (34) stoffschlüssig mit dem Wärmeübertrager (32) verbunden ist.

3. Energiespeichermodul (100) nach Anspruch 1 oder 2,
wobei die Verstärkungsschicht (34) aus einer Keramik oder einer keramischen Substanz gebildet ist, insbesondere aus einer Oxidkeramik.

4. Energiespeichermodul (100) nach Anspruch 3,
wobei die Verstärkungsschicht (34) zumindest bereichsweise, insbesondere vollständig, eine Al₂O₃-Schicht ist.

5. Energiespeichermodul (100) nach einem der Ansprüche 1 bis 4,
wobei der Wärmeübertrager (32) aus einem oxidierbaren Metall, insbesondere aus Aluminium und/oder einer Aluminiumlegierung, gebildet ist.

6. Energiespeichermodul (100) nach einem der Ansprüche 1 bis 5,
wobei der Wärmeübertrager (32) Strömungskanäle, durch welche ein Fluid fließt, insbesondere Gas, Gasgemisch, Wasser oder eine Wasser-Glykol-Mischung, und/oder geometrische Strukturen, insbesondere Lamellen, zur Vergrößerung einer äußeren und/oder inneren Oberfläche des Wärmeübertragers (32) aufweist.

7. Energiespeichermodul (100) nach einem der Ansprüche 1 bis 6,
wobei das Wärmeleitelement (36) aus einem Silikon oder einem Silikon-basierten Material gebildet ist, oder
wobei das Wärmeleitelement (36) aus einem Thermoplast-basierten Material gebildet ist.

8. Energiespeichermodul (100) nach einem der Ansprüche 1 bis 7,
wobei das Wärmeleitelement (36) als Wärmeleitpaste oder als Wärmeleitpad ausgebildet ist.

9. Energiespeichermodul (100) nach einem der Ansprüche 1 bis 8,
wobei das Energiespeichermodul (100) ferner ein Gehäuse (20) zum Aufnehmen der Vielzahl von Energiespeicherzellen (10) in einem Innenraum des Gehäuses (20) aufweist, wobei das Gehäuse (20) eine Oberseite, eine Unterseite und eine die Oberseite und die Unterseite verbindende Vielzahl von Seitenwandelementen (22) aufweist, wobei die Seitenwandelemente (22) umlaufend derart miteinander verbunden sind, dass die Seitenwandelemente (22) den Innenraum begrenzen, und wobei die Unterseite und die Oberseite zumindest bereichsweise, insbesondere vollständig, offen ausgebildet sind.

10. Energiespeichermodul (100) nach Anspruch 9,
wobei das Gehäuse (20) mit dem Temperaturmanagement-System (30) verbindbar oder verbunden ist, insbesondere über die Verstärkungsschicht (34) mit dem Wärmeübertrager (32) verbindbar oder verbunden, und zwar derart dass die Unterseite des Gehäuses (20) mit Hilfe des Temperaturmanagement-Systems (30) verschlossen wird, und/oder
wobei die Oberseite des Gehäuses (20) derart ausgebildet ist, um mit Hilfe eines Deckelelements (24) verschlossen zu werden, wobei das Deckelelement (24) bevorzugt einen positiven Anschlusspol (26a) und einen negativen Anschlusspol (26b) aufweist.

11. Energiespeichermodul (100) nach einem der Ansprüche 1 bis 10,
wobei die Energiespeicherzellen (10) Lithium-Ionen-Zellen sind, und wobei die Energiespeicherzellen (10) vorzugsweise als Lithium-Ionen-Pouch-Zellen ausgebildet sind, und/oder
wobei die Energiespeicherzellen (10) als Jelly-Rolls ausgebildet sind.

12. Energiespeichermodul (100) nach einem der Ansprüche 1 bis 11,
wobei das Energiespeichermodul (100) ferner einen Elektronik-Träger aufweist, welcher dazu ausgebildet ist, eine Vielzahl von elektrischen Einrichtungen, wie zum Beispiel eine Vielzahl von Sensoren, mindestens einen Prozessor und/oder mindestens eine Speichereinrichtung, aufzunehmen.

13. Energiespeichermodul (100) nach einem der Ansprüche 1 bis 12,
wobei das Energiespeichermodul (100) ferner eine Sammelschiene oder mehrere Sammelschienen zum elektrischen Verbinden der Vielzahl von Energiespeicherzellen (10) aufweist.

14. Energiespeichermodul (100) nach einem der Ansprüche 1 bis 13,
wobei ferner eine Messleitung zum Abgreifen von Strom- und/oder Spannungswerten einzelner, mehrerer und/oder aller Energiespeicherzellen (10) in dem Energiespeichermodul (100) vorgesehen ist.

15. Energiespeichersystem zum Einsatz in einem Fahrzeug (200), insbesondere zum Einsatz in einem Hybrid-Fahrzeug, wobei das Energiespeichersystem Folgendes aufweist:
- mindestens ein Energiespeichermodul (100) nach einem der Ansprüche 1 bis 14; und
- ein Systemgehäuse zum Aufnehmen des mindestens einen Energiespeichermoduls (100),
wobei das mindestens eine Energiespeichermodul (100) ein Temperaturmanagement-System (30) aufweist, welches einen Wärmeübertrager (32) und ein Wärmeleitelement (36) aufweist, wobei unmittelbar zwischen dem Wärmeübertrager (32) und dem Wärmeleitelement (36) eine Verstärkungsschicht (34) angeordnet ist, wobei die Verstärkungsschicht (34) einen höheren Elastizitätsmodul aufweist als der Wärmeübertrager (32), und wobei die Verstärkungsschicht (34) eine Oberfläche des Wärmeübertragers (32) direkt kontaktiert.

## Claims

1. Energy storage module (100) for use in a vehicle (200), in particular for use in a hybrid vehicle, wherein the energy storage module (100) has the following:
- a multiplicity of energy storage cells (10); and
- a temperature management system (30) associated with at least some, preferably all, of the energy storage cells (10),
wherein the temperature management system (30) has a heat exchanger (32) and a heat conducting element (36), wherein a reinforcement layer (34) is arranged directly between the heat exchanger (32) and the heat conducting element (36), wherein the reinforcement layer (34) has a higher modulus of elasticity than the heat exchanger (32), and wherein the reinforcement layer (34) directly contacts a surface of the heat exchanger (32).

2. Energy storage module (100) according to Claim 1,
wherein the reinforcement layer (34) is connected materially to the heat exchanger (32).

3. Energy storage module (100) according to Claim 1 or 2,
wherein the reinforcement layer (34) is formed from a ceramic or from a ceramic substance, in particular from an oxide ceramic.

4. Energy storage module (100) according to Claim 3,
wherein the reinforcement layer (34) is an Al2O3 layer, at least in some region or regions, in particular completely.

5. Energy storage module (100) according to one of Claims 1 to 4,
wherein the heat exchanger (32) is formed from an oxidizable metal, in particular from aluminium and/or an aluminium alloy.

6. Energy storage module (100) according to one of Claims 1 to 5,
wherein the heat exchanger (32) has flow channels, through which a fluid flows, in particular gas, a gas mixture, water or a water/glycol mixture, and/or geometric structures, in particular fins, to increase an external and/or internal surface area of the heat exchanger (32).

7. Energy storage module (100) according to one of Claims 1 to 6,
wherein the heat conducting element (36) is formed from a silicone or a silicone-based material, or
wherein the heat conducting element (36) is formed from a thermoplastic-based material.

8. Energy storage module (100) according to one of Claims 1 to 7,
wherein the heat conducting element (36) is in the form of a heat conducting paste or a heat conducting pad.

9. Energy storage module (100) according to one of Claims 1 to 8,
wherein the energy storage module (100) furthermore has a housing (20) for accommodating the multiplicity of energy storage cells (10) in an interior of the housing (20), wherein the housing (20) has a top side, a bottom side and a multiplicity of side wall elements (22) connecting the top side and the bottom side, wherein the side wall elements (22) are connected to one another circumferentially in such a way that the side wall elements (22) delimit the interior, and wherein the bottom side and the top side are of open design, at least in some region or regions, in particular completely.

10. Energy storage module (100) according to Claim 9,
wherein the housing (20) can be connected or is connected to the temperature management system (30), in particular can be connected or is connected to the heat exchanger (32) via the reinforcement layer (34), more specifically in such a way that the bottom side of the housing (20) is closed with the aid of the temperature management system (30), and/or
wherein the top side of the housing (20) is designed to be closed by means of a lid element (24), wherein the lid element (24) preferably has a positive terminal (26a) and a negative terminal (26b).

11. Energy storage module (100) according to one of Claims 1 to 10,
wherein the energy storage cells (10) are lithium-ion cells, and wherein the energy storage cells (10) are preferably in the form of lithium-ion pouch cells, and/or
wherein the energy storage cells (10) are in the form of jelly rolls.

12. Energy storage module (100) according to one of Claims 1 to 11,
wherein the energy storage module (100) furthermore has an electronics carrier, which is designed to receive a multiplicity of electrical devices, such as for example a multiplicity of sensors, at least one processor and/or at least one memory device.

13. Energy storage module (100) according to one of Claims 1 to 12,
wherein the energy storage module (100) furthermore has a busbar or a plurality of busbars for the electrical connection of the multiplicity of energy storage cells (10).

14. Energy storage module (100) according to one of Claims 1 to 13,
wherein a measuring line for picking off current and/or voltage values of individual, several and/or all energy storage cells (10) is furthermore provided in the energy storage module (100).

15. Energy storage system for use in a vehicle (200), in particular for use in a hybrid vehicle, wherein the energy storage system has the following:
- at least one energy storage module (100) according to one of Claims 1 to 14; and
- a system housing for accommodating the at least one energy storage module (100),
wherein the at least one energy storage module (100) has a temperature management system (30) which has a heat exchanger (32) and a heat conducting element (36), wherein a reinforcement layer (34) is arranged directly between the heat exchanger (32) and the heat conducting element (36), wherein the reinforcement layer (34) has a higher modulus of elasticity than the heat exchanger (32), and wherein the reinforcement layer (34) directly contacts a surface of the heat excha

## Revendications

1. Module de stockage d'énergie (100) destiné à être utilisé dans un véhicule (200), en particulier destiné à être utilisé dans un véhicule hybride, le module de stockage d'énergie (100) comportant ce qui suit :
- une pluralité de cellules de stockage d'énergie (10) ; et
- un système de gestion de température (30) associé à au moins certaines, de préférence à toutes les cellules de stockage d'énergie (10),
le système de gestion de température (30) comportant un échangeur de chaleur (32) et un élément thermoconducteur (36), une couche de renforcement (34) étant disposée directement entre l'échangeur de chaleur (32) et l'élément thermoconducteur (36), la couche de renforcement (34) comportant un module d'élasticité plus élevé que l'échangeur de chaleur (32), et la couche de renforcement (34) entrant directement en contact avec une surface de l'échangeur de chaleur (32).

2. Module de stockage d'énergie (100) selon la revendication 1,
la couche de renforcement (34) étant reliée par liaison de matière à l'échangeur de chaleur (32).

3. Module de stockage d'énergie (100) selon la revendication 1 ou 2,
la couche de renforcement (34) étant formée à partir d'une céramique ou d'une matière céramique, en particulier d'une céramique d'oxyde.

4. Module de stockage d'énergie (100) selon la revendication 3,
la couche de renforcement (34) étant au moins par endroits, en particulier complètement, une couche de Al2O3.

5. Module de stockage d'énergie (100) selon l'une des revendications 1 à 4, l'échangeur de chaleur (32) étant formé à partir d'un métal oxydable, en particulier à partir d'aluminium et/ou d'un alliage d'aluminium.

6. Module de stockage d'énergie (100) selon l'une des revendications 1 à 5, l'échangeur de chaleur (32) comportant des canaux d'écoulement, à travers lesquels circule un fluide, en particulier du gaz, un mélange de gaz, de l'eau ou un mélange eau-glycol, et/ou des structures géométriques, en particulier des lamelles, permettant d'agrandir une surface extérieure et/ou intérieure de l'échangeur de chaleur (32).

7. Module de stockage d'énergie (100) selon l'une des revendications 1 à 6,
l'élément thermoconducteur (36) étant formé à partir d'un silicone ou d'un matériau à base de silicone, ou
l'élément thermoconducteur (36) étant formé à partir d'un matériau à base de thermoplastique.

8. Module de stockage d'énergie (100) selon l'une des revendications 1 à 7, l'élément thermoconducteur (36) étant formé comme une pâte thermoconductrice ou comme un tampon thermoconducteur.

9. Module de stockage d'énergie (100) selon l'une des revendications 1 à 8, le module de stockage d'énergie (100) comportant en outre un boîtier (20) pour recevoir la pluralité de cellules de stockage d'énergie (10) dans l'espace intérieur du boîtier (20), le boîtier (20) comportant un côté supérieur, un côté inférieur et une pluralité d'éléments de paroi latérale (22) reliant le côté supérieur et le côté inférieur, les éléments de paroi latérale (22) étant reliés en périphérie les uns aux autres de telle manière que les éléments de paroi latérale (22) limitent l'espace intérieur, et le côté inférieur et le côté supérieur étant au moins par endroits, en particulier complètement, ouverts.

10. Module de stockage d'énergie (100) selon la revendication 9,
le boîtier (20) pouvant être relié ou étant relié au système de gestion de température (30), en particulier pouvant être relié ou étant relié à l'échangeur de chaleur (32) par la couche de renforcement (34), de telle manière que le côté inférieur du boîtier (20) est fermé à l'aide du système de gestion de température (30), et/ou
le côté supérieur du boîtier (20) étant formée de manière à être fermé à l'aide d'un élément de couvercle (24), l'élément de couvercle (24) comportant de manière préférée un pôle de connexion positif (26a) et un pôle de connexion négatif (26b).

11. Module de stockage d'énergie (100) selon l'une des revendications 1 à 10,
les cellules de stockage d'énergie (10) étant des cellules lithium-ion, et les cellules de stockage d'énergie (10) étant formées de préférence comme des cellules en sachet lithium-ion, et/ou
les cellules de stockage d'énergie (10) étant formées comme des rouleaux de gelée.

12. Module de stockage d'énergie (100) selon l'une des revendications 1 à 11, le module de stockage d'énergie (100) comportant en outre un support électronique qui est formé pour recevoir une pluralité de dispositifs électriques, tels qu'une pluralité de capteurs, au moins un processeur et/ou au moins un dispositif de stockage.

13. Module de stockage d'énergie (100) selon l'une des revendications 1 à 12, le module de stockage d'énergie (100) comportant en outre une barre omnibus ou plusieurs barres omnibus permettant de raccorder électriquement la pluralité de cellules de stockage d'énergie (10).

14. Module de stockage d'énergie (100) selon l'une des revendications 1 à 13, une ligne de mesure étant en outre prévue dans le module de stockage d'énergie (100) pour prélever des valeurs de courant et/ou de tension de cellules de stockage d'énergie (10) individuelles, de plusieurs et/ou de toutes les cellules de stockage d'énergie.

15. Système de stockage d'énergie destiné à être utilisé dans un véhicule (200), en particulier destiné à être utilisé dans un véhicule hybride, le système de stockage d'énergie comportant ce qui suit :
- au moins un module de stockage d'énergie (100) selon l'une des revendications 1 à 14 ; et
- un boîtier de système pour recevoir l'au moins un module de stockage d'énergie (100),
l'au moins un module de stockage d'énergie (100) comportant un système de gestion de température (30), qui comporte un échangeur de chaleur (32) et un élément thermoconducteur (36), une couche de renforcement (34) étant disposée directement entre l'échangeur de chaleur (32) et l'élément thermoconducteur (36), la couche de renforcement (34) comportant un module d'élasticité plus élevé que l'échangeur de chaleur (32), et la couche de renforcement (34) entrant directement en contact avec une surface de l'échangeur de chaleur (32).
